# EUROPEAN PATENT APPLICATION

(11) **EP 2 482 549 A1**
(43) Date of publication of application: **01.08.2012**
(21) Application number: 11161680.1
(22) Date of filing: 08.04.2011
(51) Int. Cl.: H04N 5/77, H04N 5/28, H04M 1/725, H04N 5/765, H04N 9/82

(54) **Apparatus and method for synchronizing media capture in a wireless device**

(30) Priority: 26.01.2011 US 14218
(71) Applicant: Research In Motion Limited, Waterloo, ON N2L 3W8 (CA)
(72) Inventor: Myers, William Andrew, Rolling Meadows, IL 60008 (US); Fyke, Steven Henry, Waterloo Ontario N2L 3L3 (CA)
(74) Representative: Roberts, Gwilym Vaughan

(57) **Abstract**

An apparatus and a method in a wireless device provide for coordinating data capture in two or more wireless devices. A control link is establishing a between the wireless device and a second wireless device. Thereafter, a media capture start command sent to the second wireless device. In response to sending the media capture start command media data is captured in the wireless device. Captured media data is received from the second wireless device. Finally, the media data and the captured media data from the second wireless device are combined.

## Description

The present disclosure relates generally to a wireless device, such as a cellular phone, or other wireless device that may be used in a wireless communication system, wherein the wireless device has a media data capture subsystem, such as a camera, video camera, audio digitizer, or the like for capturing audible and/or visual media data. More particularly, the present disclosure relates to an apparatus and a method for providing media capture synchronization between the wireless device and a second wireless device to improve the quality of media data captured during an event to be recorded, such as a staged event like a play, concert or speech.

### Background

Wireless devices, which can include cellular telephones, tablet personal computers, computers, and other data processing devices, are used by many throughout the world to communicate and perform various data processing tasks. Such wireless devices can communicate voice, text, images, video, data files, command and control information, and the like.

As such wireless devices acquire more processing power and storage capacity, wireless devices have become capable of capturing, processing, storing and transmitting media data, wherein such media data represents visual and audible data in the form of picture files, audio files, and video files. So, in addition to user input devices such as, buttons, physical keys (e.g., keyboards or keypad arrangements), touch screens, and the like, many wireless devices can have media input devices, such as cameras and microphones, for inputting media data in the form of pictures, video, and audio.

In some situations when a wireless device is used to capture a video recording having video media data and audio media data, the ideal location for capturing the video media data can be different from the ideal location for capturing the audio media data. For example, a parent capturing a student performance on a school stage may find that the best location for capturing the visual, or video, media data is toward the back of the room where a wide angle shot can record action on the entire stage, while the best location for capturing the audio media data may be closer to the stage, or closer to the speaker system that is used during the performance. In this situation, the wireless device user is forced to compromise both audio and visual quality when the video is recorded in a location that is both too close and too far away for visual recording and audio recording, respectively.

In view of these deficiencies in the operation of wireless devices used to record media data, an improved apparatus and method for capturing media data in a wireless device is needed. It is in view of this background information related to the design and use of a wireless device having media data capture capability the significant improvements of the present disclosure have evolved.

### Brief Description of the Drawings

FIG. 1 illustrates a wireless device having media data capture capability;

FIG. 2 illustrates a theater in which a wireless device having media data capture capability can be used;

FIG. 3 depicts a high-level functional block diagram of an electronic assembly for operation of the wireless device shown in FIG. 1;

FIG. 4 is a high-level flowchart illustrating a method of synchronizing media data capture in a master wireless device in accordance with an example implementation of the present disclosure; and

FIG. 5 is a high-level flowchart illustrating a method of synchronizing media data capture in a slave wireless device in accordance with an example implementation of the present disclosure.

### Detailed Description

An implementation of the present disclosure advantageously provides an apparatus and a method for synchronizing media data capture in a wireless device. The disclosure generally relates to a wireless device, which is a portable electronic device in the implementations described herein. Examples of wireless devices include mobile, or handheld, wireless communication devices such as pagers, cellular phones, cellular smart-phones, wireless organizers, personal digital assistants, wirelessly enabled notebook computers, tablet computers, and so forth.

For simplicity and clarity of illustration, reference numerals may be repeated among the figures to indicate corresponding or analogous elements. Numerous details are set forth to provide an understanding of the implementations described herein. Some implementations may be practiced without these details. In other instances, well-known methods, procedures, and components have not been described in detail to avoid obscuring the implementations described. The description should not be considered as limited to the scope of the implementations described herein.

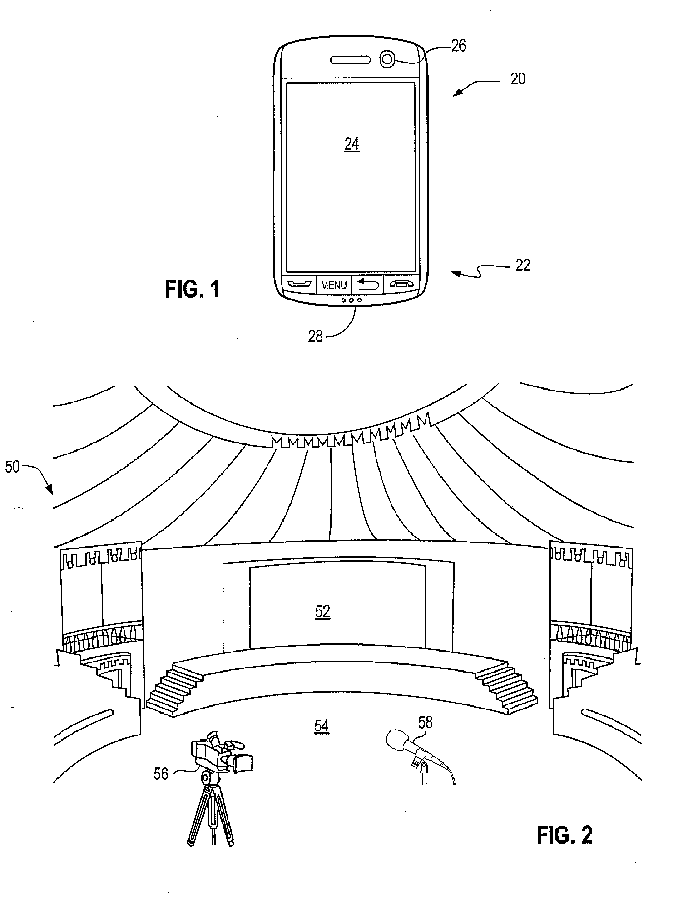

Referring first to FIG. 1, a representative wireless device 20 is depicted. Wireless device 20 can include buttons 22, which can be used by a user to operate wireless device 20 by selecting various menus and functions. The menus and functions of wireless device 20 can also be displayed and selected (or otherwise manipulated) using touch screen 24, which can be sensitive to human touch or input with a stylus.

Many implementations of wireless device 20 can include camera 26 and microphone 28. Camera 26 can be used to capture visual media data in the form of still photographs or moving images. Such visual media data can be digital data stored in various formats that represent an image captured by camera 26. For example, visual media data created as a result of capturing a still photograph with camera 26 may be digitally stored as a Joint Photographic Experts Group (JPEG) file. And visual media data created as a result of capturing moving images with camera 26 may be digitally stored as a Moving Picture Experts Group (MPEG) file. Similarly, audio media data can be captured with microphone 28 and stored as an MPEG-1 or MPEG-2 Audio Layer 3 (i.e., MP3) file. In some implementations, wireless device 20 can include connectors for attaching external media data capturing devices or other external components, such as external cameras and microphones.

When a wireless device user wants to record an event, such as a school play, the user may use wireless device 20 to record a video, which has a combination of audio and visual media data. For example, FIG. 2 depicts auditorium 50 having a stage 52 and an audience area 54. A wireless device user in auditorium 50 may have a choice of location in audience area 54 from which to capture the video, but that choice can involve a compromise. If the wireless device user wants to record high-quality audio, the user may wish to be closer to stage 52, as illustrated by the position of label 58, and the depiction of audio media data capture device (e.g., a microphone). However, if the user would like a vantage point that allows capturing a view of the entire stage, the user may wish to be further back in audience area 54, such as the location of label 56, and the depiction of visual media data capture device (e.g., video camera). This compromise arises because the best location in audience area 54 to capture audio media data may not be the best location to capture video media data.

In accordance with the present disclosure, two or more wireless devices 20 can be used to capture media data from different locations in audience area 54. Each of the different locations can be optimized for the type of media data capture performed. Thus, a wireless device 20 for capturing visual media data can be positioned toward the back of audience area 54 so that a wide-angle shot can encompass the entire stage 52, and another, second wireless device 20 can be positioned closer to a stage, speaker, or other high fidelity sound source for optimally capturing audio media data.

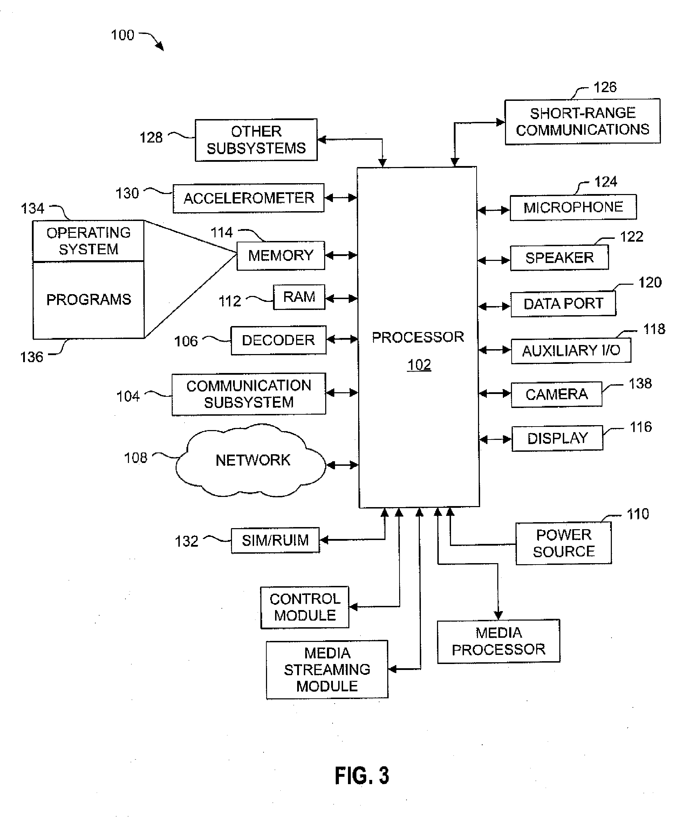

FIG. 3 depicts a high-level functional block diagram of an electronic assembly 100 for operating wireless device 20 shown in FIG. 1. Electronic assembly 100 can include multiple components, such as processor 102, which can control the overall operation of wireless device 20. Communication functions provided by wireless device 20 can include voice, data, and command communications, which may be performed by communication subsystem 104. Communication subsystem 104 can include various combinations of hardware, software, and firmware to perform a designed function.

Data received by wireless device 20 can be processed, including decompressed and decrypted, by decoder 106. Communication subsystem 104 can receive messages from, and send messages to, wireless network 108. Wireless network 108 may be any type of wireless network, including, but not limited to, a cellular network, a wireless data network, a wireless voice network, and a network that supports both voice and data communications. And a wireless network can use a variety offormats, such as those specified by standards including Global System for Mobile Communications (GSM), Code division multiples access (CDMA), wireless Ethernet (Institute of Electrical and Electronics Engineers standard 802.11), Wi-Fi, and other similar standards and wireless networks.

Power source 110 can provide power to operate wireless device 20, and can be implemented with one or more rechargeable batteries, or a port to an external power supply to provide the appropriate power to all components of electronic assembly 100.

Processor 102 can interact with other components, such as random access memory (RAM) 112, memory 114, display 116, auxiliary input/output (I/O) subsystem 118, data port 120, speaker 122, microphone 124, short-range communications subsystem 126, and other subsystems 128. A user can operate functions of wireless device 20 with a graphical user interface produced on display 116, with touches and gestures detected using touch-sensitive overlay on display 116. Processor 102 can interact with the touch-sensitive overlay via an electronic controller (which can be represented by other subsystems 128). As part of the graphical user interface, information, such as text, characters, symbols, images, icons, and other items that may be displayed or rendered on wireless device 20, can be displayed on display 116. Processor 102 can interact with accelerometer 130, which may be used to detect a direction of gravitational forces, or user-input acceleration forces. In other implementations, buttons, such as buttons 22 in FIG. 1, can be used to operate select functions of wireless device 20.

To identify and authenticate a subscriber for obtaining access to wireless network 108, wireless device 20 can use a subscriber identity module or a removable user identity module (SIM/RUIM) card 132. Alternatively, user identification information can be programmed into memory 114.

Wireless device 20 can include operating system 134 and software programs 136, which can both be executed by processor 102. Operating system 134 and software programs 136 can be stored in a persistent, updatable store, such as memory 114. Additional applications or programs can be loaded onto wireless device 20 through wireless network 108, auxiliary I/O subsystem 118, data port 120, short-range communications subsystem 126, or any other subsystem 128 suitable for transferring program files.

A received signal, such as a text message, an e-mail message, or web page download can be processed by communication subsystem 104 and input to processor 102. Processor 102 can processes the received signal for output to the display 116 and/or to the auxiliary I/O subsystem 118. A wireless device user may generate data items, for example e-mail messages, which may be transmitted over wireless network 108 through communication subsystem 104. For voice communications, the overall operation of wireless device 20 can be similar. Speaker 122 can be used to output audible information converted from electrical signals, and microphone 124 can be used to convert audible information into electrical signals for processing.

In accordance with an important aspect of the present disclosure, control module 140, which is coupled to processor 102, can be used to set up and operate a wireless control link between wireless device 20 and a second wireless device used to capture media data. As discussed below in more detail, the wireless control link can be used to control selected functions in a wireless device for capturing media data. These functions can include starting and stopping or pausing media data capture, modes of capturing media data, formatting and quality of captured media data, and other similar control functions.

In some implementations, setting up a control link between wireless devices can be aided by sharing information in a chat-room-like environment, or using other social networking tools and location finding tools that allow users at a particular location to contact one another. For example, social tools and location services provided under trademarks such as Twitter^{TM}, Facebook^{TM}, or Loopt^{TM} can be used to help people find other users willing to coordinate wireless devices in producing a collaborative media data file. Discovering capabilities or services provided by various available wireless devices 20 can be implemented and coordinated by using protocols such as Simple Service Discovery Protocol (SSDP), which is a UPnP protocol, used in several brands of network equipment. SSDP uses Hypertext Transfer Protocol (HTTP) notification announcements that give a service-type URI and a Unique Service Name (USN).

Control module 140 can operate in either a master or a slave mode, where the master sends controls or instructions from, say, wireless device 56 (i.e., a wireless device 20 located at label 56 in FIG. 1) to wireless device 58 (i.e., a wireless device 20 located at label 58 in FIG. 1), which receives the commands and operates in response to the commands. The determination of which unit is the master and which is the slave can be determined when the control link between the two is created.

Streaming media control module 142, which is coupled to processor 102, can be used to send or receive streamed, captured media data. For example, if audio media data is streamed from wireless device 58 to wireless device 56, streaming media control module 142 in wireless device 58 is used to transmit streaming media, and streaming media control module 142 in wireless device 56 is used to receive streaming media data. Streaming media data can include a near real-time transfer of captured media data wherein a target delay in the transfer does not exceed a specified threshold.

Streaming media control module 142 can use datagram protocols, such as the User Datagram Protocol (UDP), to send the media stream as a series of small packets. As an example of another protocol, Real-time Streaming Protocol (RTSP), Real-time Transport Protocol (RTP) and the Real-time Transport Control Protocol (RTCP) can be used to stream media over networks. RTSP runs over a variety of transport protocols, while RTP and RTCP are built on top of UDP. In some implementations of the disclosure, media data can be streamed over an ordinary wireless call or chat session.

Media processor 144, which is coupled to processor 102, can be used to combine captured media data from two or more wireless devices 20 to produce a media data file, such as a video file. Media processor 144 can also be used to properly time-align media data in two (or more) files so that, for example, video media data is synchronized with audio media data. Such time-aligning can be accomplished by using files with embedded time coding information, time signals or data sent between wireless devices, or other known methods of analyzing and synchronizing media data files. In some implementations, media data files can be time aligned by analyzing sound or images in the files to determine points in the files that should coincide.

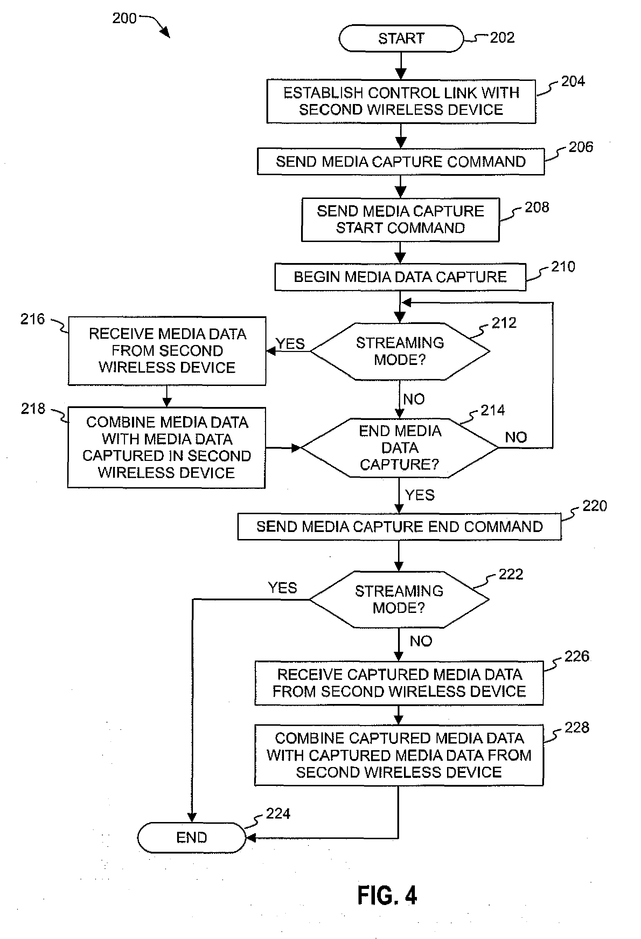

Referring now to FIG. 4, there is depicted a high-level flowchart illustrating an exemplary method of coordinating media data capture using a wireless device in accordance with one example implementation of the present disclosure. As illustrated, method 200 begins at block 202, and continues at block 204, wherein the method establishes a control link with a second wireless device. In one implementation, the control link is a wireless data link, or communication channel, that can be used to transmit control or other information between wireless device 56 (e.g., a wireless device 20 located at position labeled 56 in FIG. 2, which may be referred to herein as wireless device 56) and the second wireless device (e.g., a wireless device 20 located at position labeled 58 in FIG. 2, which may be referred to herein as second wireless device 58). By using such a control link, wireless device 56 can gain control over selected functions in second wireless device 58. In this example, wireless device 56 can be considered a master device and second wireless device 58 can be considered a slave.

Establishing a control link can also include a processes of discovering, identifying, authenticating, and negotiating with a second wireless device that will be used to capture media data. Wireless devices can make known capabilities to cooperate with another wireless device in the vicinity by using broadcast information on a network, responding to a general network query, using specialized applications for coordinating media data capture, tools known as "zero configuration networking" (zeroconf), and other similar methods.

After establishing the control link, method 200 sends a media capture command from wireless device 56 to second wireless device 58, as depicted at block 206. In one implementation, the media capture command can include instructions and data to configure the operation of second wireless device 58 in capturing media data. For example, a media capture command can instruct second wireless device 58 to capture audio only, or to capture both audio and video. Media capture commands can also specify media data storage formats, captured data quality, and other similar parameters "sed in second wireless device 58 to capture media data in a specific manner. The media capture command can also include instructions that specify operating modes, such as a streaming or non-streaming mode, which is described in further detail below. In other implementations, media capture commands can instruct second wireless device 58 to selectively send visual media data with the audio media data so that the final recording can include switched video, or cut-away shots, from a different viewing angle.

Next, method 200 sends a media capture start command, as illustrated at block 208. In one implementation, the media capture start command can be an instruction to second wireless device 58 to begin capturing media data in accordance with the media capture command of block 206. In another implementation, media capture start command can include time data that will be used to coordinate the beginning of capturing media data in both wireless device 56 and in second wireless device 58. Once the media capture start command is sent, both wireless device 56 and second wireless device 58 begin capturing media data.

After beginning media capture, process 200 determines whether or not wireless devices 56 and 58 are operating in a streaming mode, as depicted at decision block 212. In a streaming mode, second wireless device 58 is configured to wirelessly transmit captured media data, in real-time (or near real-time), to wireless device 56. If wireless devices 56 and 58 are operating in streaming mode, process 200 passes to block 216, wherein process 200 operating in wireless device 56 receives captured media data from second wireless device 58. In one implementation, media streaming module 142 can be used to receive the streamed captured media data.

After receiving captured media data from second device 58, process 200 combines the media data captured in wireless device 56 with the media data captured in second wireless device 58, as depicted at block 218. In some implementations, media processor 144 can be used to combine media data received from second wireless device 58. The media data from second wireless device 58 may have to be time corrected, or time aligned, in order to properly combine the media data into a single file. Such synchronization may be necessary because of capturing or transmitting delays caused by encoding/decoding, and other similar delays caused by processing or transferring the data. Time correction can be performed using time code data embedded in the captured media data files, or other techniques for marking corresponding points in the data media file.

Whether process 200 uses the streaming mode and has completed the combining of media data at block 218, or if process 200 is not in the streaming mode and is continuing to capture media data, the process next determines whether an end media data capture control has been input by the user, as illustrated at block 214. A wireless device user can indicate that the media data capture should end by pressing a button, or using a touch screen input, or other method of controlling wireless device 56. In some implementations, a user may enter a pause command rather than an end command. If the pause command is selected, wireless devices 56 and 58 can momentarily stop capturing media data while maintaining the control link established in block 204, and preserving other recording parameters of the recording session, such as the parameters established between the wireless devices with the media capture command at block 206.

If the user has not indicated an end to media data capture, process 200 can iteratively return to block 212, wherein media data capture continues in both wireless devices 56 and 58.

If the user has indicated an end to media data capture, the process ends media data capture in wireless device 56, and sends a media capture end command from wireless device 56 to second wireless device 58, as depicted at block 220. In addition to stopping media data capture in wireless device 56, a media capture end command is sent to wireless device 58 to stop the process of capturing media data, close any media files, stop any streaming of captured media data, and change the status or state of the control link. If files are stored locally in either wireless device 56 or 58, some files may need to be finalized before the files are closed.

Next, process 200 determines whether or not the streaming mode was used in the data capture, as illustrated at block 222. If the streaming mode was used, the process of capturing media data is concluded, as depicted at block 224. In some implementations, when streaming mode is used, captured media data has already been combined as shown in block 218.

If it is determined that the streaming mode was not used at block 222, process 200 can receives captured media data from second wireless device 58, as illustrated at block 226. The captured media data from second wireless device 58 can be received wirelessly using the network, or a short-range wireless link, or, alternatively, using a wired connection. Once captured media data is received in wireless device 56, which in this example can be considered the master device, post processing editing operations can be performed in wireless device 56 to manipulate all the captured media data.

After receiving the captured media data from second wireless device 58, process 200 can combine the captured media data (i.e., media data captured in wireless device 56) with the captured media data from second wireless device 58, as depicted at block 228. As mentioned previously with reference to block 218, this process of combining media data may include a process of synchronizing, or time aligning the two captured media files. In some implementations, these two captured media files can be further edited or combined if the files are transferred to a computer.

After the captured media data files have been properly combined in block 228, the process is concluded, as depicted at block 224.

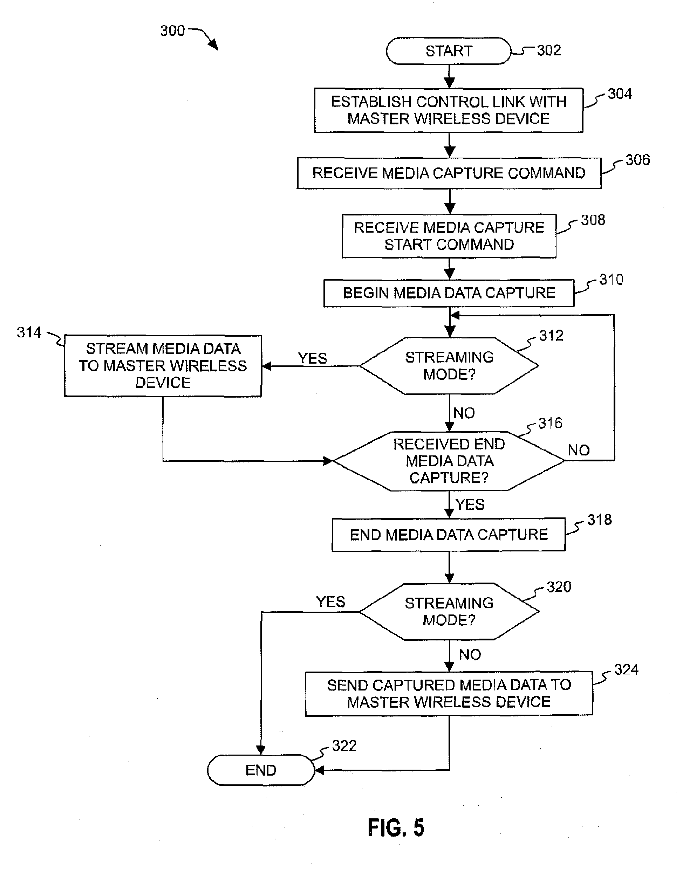

With reference now to FIG. 5, there is depicted a high-level flowchart illustrating an exemplary method of capturing media data in a wireless device acting as a slave wireless device under the control of a master wireless device. In this example, the slave wireless device can be referred to as slave wireless device 58 (see FIG. 2), and the master wireless device can be referred to as master wireless device 56 (see FIG. 2). As illustrated, process 300, which can be executed in slave wireless device 58, begins at block 302, and thereafter passes to block 304, wherein the process establishes a control link with master wireless device 56. The control link is similar to the control link described with reference to block 204 in FIG. 4, wherein the control link allows a master wireless device to gain control over media data capture functions in the slave device.

After the control link is established with master wireless device 56, process 300 receives a media capture command from master wireless device 56, as depicted at block 306. The media capture command can be used to configure and specify the media data capturing functions in slave wireless device 58. For example, the media capture command can specify that slave wireless device 58 will capture audio media data only, in a high-quality mode, and stream the captured audio media data to master wireless device 56.

Next, process 300 receives a media capture start command, as illustrated at block 308. The media capture start command instructs slave wireless device 58 to begin media data capture in accordance with the specifications and configuration set by the media capture command. Process 300 then begins capturing media data, as depicted at block 310.

At decision block 312, process 300 determines whether or not the streaming mode has been selected. If the streaming mode has been selected, the process passes to block 314, wherein process 300 streams captured media data from slave wireless device 58 to master wireless device 56. If the streaming mode has not been selected, the process continues to capture and store media data as indicated by the "no" branch from block 312 to block 316.

At block 316, process 300 determines whether or not an end media data capture command has been received from master wireless device 56. If an end capture command has not been received, the process passes from block 316 to block 312, wherein media data capturing continues.

Following the reception of an end media data capture command, process 300 ends media data capture, as depicted at block 318. The process then determines whether or not the streaming mode has been selected, as illustrated at block 320. If the streaming mode has been selected, media data captured in slave wireless device 58 has already been sent (i.e., streamed) to master wireless device 56 at block 314, which means process 300 of capturing media data can end at block 322.

If, at block 320, the streaming mode has not been selected, the process passes to block 324, wherein the captured media data is sent to master wireless device 56. Thereafter, the process of capturing media data in a slave wireless device ends, as illustrated at block 322.

In other implementations of the present disclosure, more than two wireless devices can be used in a coordinated media capture session. For example, if three wireless devices are used, one wireless device can be the master and record video information in a location further from stage 52 where a wide-angle view is provided. Second and third wireless devices, which operate a slave mode for capturing audio media data, can then be positioned closer to stage 52 on the right and left sides of the stage, respectively.

In other implementations, second wireless device 58 can be controlled by wireless device 56 to selectively capture video media data in addition to capturing audio media data so that the video can switch between camera views of the wireless devices. Such control can exist in both the streaming and non-streaming modes.

In another implementation of the disclosure, a slave wireless devices can include a photo flash function which can be controlled by a master wireless device using an established control link. In yet another implementation of the disclosure, a master wireless device can use slave wireless devices to collect visual media data that can be used to create a panorama or 3D photo collage, such as the photo collage known as a Photosynth^{TM} model. Photosynth^{TM} is a software application from Microsoft Live Labs^{TM} and the University of Washington that analyzes digital photographs and generates a three-dimensional model of the photos and a point cloud of a photographed object.

Implementations of the disclosure, and many improvements and advantages thereof, have been described with particularity. The description includes examples of implementing the disclosure, and these descriptions of examples are not intended to limit the scope of the disclosure. The scope of the disclosure is defined by the following claims.

## Claims

1. A wireless device comprising:
a processor;
a camera coupled to the processor for capturing visual media data;
an audio system coupled to the processor for capturing audio media data;
a communication subsystem coupled to the processor for wirelessly transmitting media capture commands to a second wireless device to configure capturing of remote media data in the second wireless device; and
a control module coupled to the processor for wirelessly transmitting a start media capture command to the second wireless device for starting capturing of remote media data in the second wireless device.

2. The wireless device of claim 1 further comprising a media streaming module coupled to the processor for receiving remote media data that is wirelessly streamed from the second wireless device.

3. The wireless device of claim 1 further comprising a media processor coupled to the processor for combining the visual media data with the remote media data captured by the second wireless device.

4. The wireless device of claim 3 wherein the media processor further comprises a media processor for combining, in real-time, the visual media data with the remote media data captured by the second wireless device.

5. The wireless device of claim 1:
wherein the communication subsystem further comprises a communication subsystem is for wirelessly receiving from another wireless device a media capture command to configure the wireless device for media data capture;
wherein the control module further comprises a control module for receiving a start media capture command for starting capturing of media data.

6. The wireless device of claim 2 wherein the media streaming module further comprises a media streaming module for streaming, in real-time, captured media data to another wireless device.

7. A method for coordinating data capture in a wireless device, said method comprising:
establishing a control link between the wireless device and a second wireless device;
sending a media capture start command via the control link to the second wireless device;
capturing media data in the wireless device;
receiving remote media data from the second wireless device; and
combining the media data with the remote media data from the second wireless device.

8. The method of claim 7 wherein the receiving remote media data from the second wireless device comprises receiving, in real-time, remote media data from the second wireless device.

9. The method of claim 8 wherein the combining the media data with the remote media data from the second wireless device comprises combining, in real-time, the media data with the remote media data streamed from the second wireless device.

10. The method of claim 7 wherein the receiving remote media data from the second wireless device comprises receiving a remote media data file from the second wireless device.

11. The method of claim 10 wherein the combining the media data with the remote media data from the second wireless device comprises combining a media data file with the remote media data file from the second wireless device.

12. The method of claim 7 wherein the combining the media data with the remote media data from the second wireless device further comprises synchronizing the media data with the remote media data from the second wireless device.

13. The method of claim 7 further comprising sending a media capture command to the second wireless device to specify the capturing of remote media data in the second wireless device.

14. The method of claim 13 wherein the media capture command specifies a format of the remote media data from the second wireless device.

15. The method of claim 7 wherein the establishing a control link between the wireless device and a second wireless device further comprises establishing a control link between the wireless device and a second wireless device for controlling the capture of one or more types of media data in the second wireless device.
